# EUROPEAN PATENT APPLICATION

(11) **EP 3 842 493 A1**
(43) Date of publication of application: **30.06.2021**
(21) Application number: 19852238.5
(22) Date of filing: 21.08.2019
(51) Int. Cl.: C08L 75/04, C08G 18/06, C08K 3/00

(54) **COMPOSITION, METHOD FOR PRODUCING SAID COMPOSITION, URETHANE RESIN, AND COOLING COMPONENT AND ARTICLE PROVIDED WITH SAID URETHANE RESIN**

(30) Priority: 23.08.2018 JP 2018156044
(71) Applicant: Sanyo Chemical Industries, Ltd., Kyoto-shi, Kyoto 605-0995 (JP)
(72) Inventor: MORI, Koichi, Kyoto-shi, Kyoto 605-0995 (JP); IKEDA, Shunsuke, Kyoto-shi, Kyoto 605-0995 (JP); OHTA, Tomoya, Kyoto-shi, Kyoto 605-0995 (JP)
(74) Representative: Mewburn Ellis LLP
(86) International application number: PCT/JP2019/032580
(87) International publication number: WO 2020/040177

(57) **Abstract**

The present invention aims to provide a composition that gives, as a reaction product, a urethane resin having excellent heat dissipation ability and excellent flexibility. The composition of the present invention contains a polyol (A), a polyisocyanate (B), and an inorganic filler (C), wherein the polyol (A) contains a polyol (A1) having at least three hydroxy groups in one molecule, an isocyanate index of the polyisocyanate (B) based on the polyol (A) is 0.20 to 0.77, the isocyanate index being a ratio of a total mole number of isocyanate groups of the polyisocyanate (B) in the composition to a total mole number of hydroxy groups of the polyol (A) in the composition, and a weight percent of the inorganic filler (C) is 70 to 97 wt% based on the weight of the composition.

## Description

### TECHNICAL FIELD

The present invention relates to a composition, a method of producing the composition, a urethane resin, a cooler including the urethane resin, and a product including the urethane resin.

### BACKGROUND ART

Products such as electronic components that generate heat may malfunction when the temperature thereof is too high. Thus, coolers are used as appropriate in order to avoid such failures. An example of such coolers is one including a heat dissipation sheet having excellent heat dissipation ability (thermal conductivity) as disclosed in Patent Literature 1.

Increasing the heat dissipation efficiency by the heat dissipation sheet requires gapless adhesion of the sheet to fine irregularities on a surface of the heat generating component. Thus, the heat dissipation sheet is required to have flexibility to be able to follow such fine irregularities on the surface of the component.

However, the heat dissipation sheet disclosed in Patent Literature 1, for example, fails to achieve the balance of sufficient heat dissipation ability (thermal conductivity) and sufficient flexibility. A heat dissipation sheet having a high thermal conductivity but insufficient flexibility cannot sufficiently exhibit its heat dissipation ability.

The recent increase in heat generating components having complicated shapes has made the above problem more noticeable, and it has been demanded to develop a heat dissipation sheet capable of solving the problem.

### CITATION LIST

### - Patent Literature

Patent Literature 1: JP 2012-21124 A

### SUMMARY OF INVENTION

### - Technical Problem

The present invention aims to provide a composition that gives, as a reaction product, a urethane resin having excellent heat dissipation ability and excellent flexibility.

### - Solution to Problem

As a result of extensive studies to solve the above problem, the present inventors arrived at the present invention.

Specifically, the present invention provides a composition containing a polyol (A), a polyisocyanate (B), and an inorganic filler (C), wherein the polyol (A) contains a polyol (A1) having at least three hydroxy groups in one molecule, an isocyanate index of the polyisocyanate (B) based on the polyol (A) is 0.20 to 0.77, the isocyanate index being a ratio of a total mole number of isocyanate groups of the polyisocyanate (B) in the composition to a total mole number of hydroxy groups of the polyol (A) in the composition, and a weight percent of the inorganic filler (C) is 70 to 97 wt% based on the weight of the composition. The present invention also relates to a method of producing the composition, including mixing an agent containing the polyol (A) and an agent containing the polyisocyanate (B); a urethane resin that is a reaction product of the composition; a cooler including the urethane resin and a heat receiving component; and a product including the urethane resin and a heat generating component.

### - Advantageous Effects of Invention

The urethane resin that is a reaction product of the composition of the present invention has excellent heat dissipation ability and excellent flexibility.

### DESCRIPTION OF EMBODIMENTS

The composition of the present invention contains a polyol (A), a polyisocyanate (B), and an inorganic filler (C) .

The polyol (A) includes a polyol (A1) having at least three hydroxy groups in one molecule. The polyol (A1) having at least three hydroxy groups in one molecule can be used in combination with, for example, an acyclic aliphatic polyol and an adduct of an alkylene oxide (hereinafter, the "alkylene oxide" is sometimes abbreviated to "AO") therewith, an alicyclic polyol and an adduct of AO therewith, an adduct of AO with a di- or higher hydric phenol, a polyester polyol, a polybutadiene polyol, a hydrogenated polybutadiene polyol, and/or a polycarbonate polyol.

Examples of the polyol (A1) having at least three hydroxy groups in one molecule include polyether polyol obtained by addition polymerization of an alkylene oxide (e.g., ethylene oxide or propylene oxide), trimethylolethane, trimethylolpropane, 1,2,6-hexanetriol, glycerol, and pentaerythritol. Polyether polyol is preferred in order to improve the flexibility of the composition.

Examples of the acyclic aliphatic polyol include those having 2 to 16 carbon atoms. Specific examples thereof include ethylene glycol, 1,2-propylene glycol, 1,3-propylene glycol, polytetramethylene ether glycol, 1,4-butanediol, 1,6-hexanediol, octanediol, decanediol, dodecanediol, hexadecanediol, neopentyl glycol, 2,2-diethyl-1,3-propanediol, and 3-methyl-1,5-pentanediol.

Examples of the adduct of AO with the acyclic aliphatic polyol include adducts of the C2-C4 AO (ethylene oxide, 1,2- or 1,3-propylene oxide, or 1,2-, 1,3-, 1,4- or 2,3-butylene oxide) with the acyclic aliphatic polyol.

Two or more of these AOs may be used in combination. When two or more thereof are used in combination, the addition form may be any of block addition, random addition, or a combination thereof.

Examples of the alicyclic polyol include those having 4 to 16 carbon atoms. Specific examples thereof include 1,4-cyclohexanediol, 1,4-cyclohexanedimethanol, and hydrogenated bisphenol A.

Examples of the adduct of AO with the alicyclic polyol include adducts of the C2-C4 AO with the alicyclic polyol.

In the adduct of AO with a di- or higher hydric phenol, examples of the di- or higher hydric phenol include those having 6 to 16 carbon atoms. Specific examples thereof include bisphenol A, bisphenol S, cresol, and hydroquinone.

Examples of the polyester polyol include condensates of polyols (the acyclic aliphatic polyol and the adduct of AO therewith, the alicyclic polyol and the adduct of AO therewith, and the adduct of AO with the di- or higher hydric phenol) and polycarboxylic acid.

Examples of the polycarboxylic acid include C2-C20 acyclic aliphatic polycarboxylic acids (e.g., oxalic acid, malonic acid, dipropylmalonic acid, succinic acid, 2,2-dimethyl succinic acid, glutaric acid, 2-methylglutaric acid, 2,2-dimethylglutaric acid, 2,4-dimethylglutaric acid, 3-methylglutaric acid, 3,3-dimethylglutaric acid, 3-ethyl-3-methylglutaric acid, adipic acid, 3-methyladipic acid, pimelic acid, 2,2,6,6-tetramethylpimelic acid, azelaic acid, sebacic acid, undecane diacid, dodecane diacid, pentadecane diacid, tetradecane diacid, heptadecane diacid, octadecane diacid, nonadecane diacid, and eicosanic diacid); C5-C20 alicyclic polycarboxylic acids (e.g., cyclopropanedicarboxylic acid, 1,4-cyclohexanedicarboxylic acid, cyclohexenedicarboxylic acid, dicyclohexyl-4,4'-dicarboxylic acid, and camphoric acid); and C8-C20 aromatic polycarboxylic acids (terephthalic acid, isophthalic acid, 2-methylterephthalic acid, 4,4-stilbenedicarboxylic acid, naphthalenedicarboxylic acid, 4,4-biphenyldicarboxylic acid, orthophthalic acid, and diphenyl ether dicarboxylic acid).

Commercial products of the polybutadiene polyol, such as "G-1000", "G-2000", and "G-3000" (Nippon Soda Co., Ltd.), are available.

Commercial products of the hydrogenated polybutadiene polyol, such as "GI-1000", "GI-2000", and "GI-3000" (Nippon Soda Co., Ltd.), are available.

Examples of the polycarbonate polyol include reaction products of the polyol (A1) having at least three hydroxy groups in one molecule or the acyclic aliphatic polyol with phosgene.

Commercial products of the polycarbonate polyol, such as C2090 (Kurary Co., Ltd.), are available.

In order to improve the flexibility of the resulting urethane resin, the composition of the present invention contains the polyol (A1) having at least three hydroxy groups in one molecule as the polyol (A). In terms of moldability of the resulting urethane resin, preferably, the composition of the present invention further contains an adduct of AO with the polyol (A1) having at least three hydroxy groups in one molecule or with the acyclic aliphatic polyol, and a polycarbonate polyol; and more preferably, the composition of the present invention contains an adduct of AO with glycerol, an adduct of AO with pentaerythritol, and a polycarbonate polyol that is a reaction product of 3-methyl-1,5-pentanediol and 1,6-hexanediol with phosgene.

One polyol (A) may be used alone or two or more thereof may be used in combination. When two or more thereof are used, one of them may be a polyol having at least two hydroxy groups.

The number average molecular weight of the polyol (A) is preferably 1000 to 10000, more preferably 1500 to 9000, in terms of moldability of the resulting urethane resin.

In the present invention, the number average molecular weight can be measured by gel permeation chromatography (hereinafter abbreviated to "GPC"), for example, under the following conditions.
Device: HLC-8120 (Tosoh Corporation)
Column: TSKgel α-6000, G3000 PWXL (Tosoh Corporation) Detector: refractive index (RI)
Eluent: 0.5% sodium acetate in water/methanol (volume ratio: 70/30)
Eluent flow rate: 1.0 ml/min
Column temperature: 40°C
Sample concentration: 0.25 wt%
Amount to be injected: 200 µl
Standard substance: TSK Standard Polyethylene Oxide (Tosoh Corporation)
Data processing software: GPC-8020 model II (Tosoh Corporation)

The hydroxyl value of the polyol (A) is preferably 10 to 120. It is more preferably 20 to 60 in terms of flexibility of the resulting urethane resin.

The hydroxyl value is the amount (mg) of potassium hydroxide required to neutralize the acetic acid bonded to the hydroxy group in acetylation of 1 g of the polyol (A), and can be measured in accordance with the measurement method specified in JIS K 0070 "Test methods for acid value, saponification value, ester value, iodine value, hydroxyl value and unsaponifiable matter of chemical products".

Examples of the polyisocyanate (B) include acyclic aliphatic polyisocyanates, alicyclic polyisocyanates, aromatic polyisocyanates, and isocyanurates of these polyisocyanates.

Examples of the acyclic aliphatic polyisocyanates include C4-C20 acyclic aliphatic polyisocyanates. Specific examples thereof include ethylene diisocyanate, tetramethylene diisocyanate, hexamethylene diisocyanate, dodecamethylene diisocyanate, 2,2,4-trimethylhexamethylene diisocyanate, and lysine diisocyanate.

The term "C4-C20 acyclic aliphatic polyisocyanates" means acyclic aliphatic polyisocyanates having 4 to 20 carbon atoms including the carbon atoms of the isocyanate group.

Examples of the alicyclic polyisocyanates include C6-C17 alicyclic polyisocyanates. Specific examples thereof include isophorone diisocyanate, 4,4-dicyclohexylmethane diisocyanate, cyclohexylene diisocyanate, methylcyclohexylene diisocyanate, bis(2-isocyanatoethyl)-4-cyclohexene-1,2-dicarboxylate, and 2,5- or 2,6-norbornane diisocyanate.

The term "C6-C17 alicyclic polyisocyanates" means alicyclic polyisocyanates having 6 to 17 carbon atoms including the carbon atoms of the isocyanate group.

Examples of the aromatic polyisocyanates include C8-C22 aromatic polyisocyanates. Specific examples thereof include 1,3- or 1,4-phenylene diisocyanate, 2,4- or 2,6-tolylene diisocyanate (TDI), 4,4'- or 2,4'-diphenylmethane diisocyanate (MDI), m- or p-isocyanatophenylsulfonyl isocyanate, 4,4'-diisocyanatobiphenyl, 3,3'-dimethyl-4,4'-diisocyanatobiphenyl, 3,3'-dimethyl-4,4'-diisocyanatodiphenylmethane, 1,5-naphthalene diisocyanate, m- or p-isocyanatophenylsulfonyl isocyanate, m- or p-xylylene diisocyanate (XDI), and α,α,α',α'-tetramethylxylylene diisocyanate (TMXDI).

The term "C8-C22 aromatic polyisocyanates" means aromatic polyisocyanates having 8 to 22 carbon atoms including the carbon atoms of the isocyanate group.

Examples of the isocyanurates include trimers of polyisocyanates (e.g., the acyclic aliphatic polyisocyanates, the alicyclic polyisocyanates, and the aromatic polyisocyanates).

Commercial products of the isocyanurates, such as "TLA-100" (Asahi Kasei Corp.), are available.

In terms of moldability of the resulting urethane resin, preferred examples of the polyisocyanate (B) include the acyclic aliphatic polyisocyanates, the alicyclic polyisocyanates, isocyanurates of the acyclic aliphatic polyisocyanates, and isocyanurates of the alicyclic polyisocyanates.

One polyisocyanate (B) may be used alone or two or more thereof may be used in combination.

The NCO content (weight percent of NCO relative to the weight of the polyisocyanate (B)) of the polyisocyanate (B) is preferably 1 to 60 wt%. The NCO content is more preferably 2 to 40 wt% in terms of flexibility of the resulting urethane resin.

Examples of the inorganic filler (C) include metal hydroxides, metal oxides, and metal nitrides.

One inorganic filler (C) may be used alone or two or more thereof may be used in combination.

Examples of the metal hydroxides include aluminum hydroxide and magnesium hydroxide.

Examples of the metal oxides include aluminum oxide, magnesium oxide, silicon oxide (e.g., silica), and titanium oxide.

Examples of the metal nitrides include boron nitride, aluminum nitride, and silicon nitride.

The inorganic filler (C) may have any shape. For example, spherical, platy, acicular, or crushed filler can be used. Of these, sphere filler is preferred in terms of moldability of the resulting urethane resin.

When the inorganic filler (C) is spherical, the d50 (the particle size at which the cumulative particle volume in the volume-based particle size distribution is 50%) of the inorganic filler (C) is preferably 0.01 to 200 µm, more preferably 0.1 to 150 µm, in terms of moldability of the resulting urethane resin and dispersibility of the inorganic filler (C).

The d50 of the inorganic filler (C) can be measured using a laser diffraction type particle size distribution measuring device (e.g., SALD-2000A available from Shimadzu Corporation). In this measurement, water can be used as a dispersion medium to disperse the inorganic filler (C).

Preferably, the inorganic filler (C) is a combination of two or more inorganic fillers having different d50s in terms of moldability of the resulting urethane resin.

For example, a combination of an inorganic filler (C1) having a d50 of 20 to 100 µm and an inorganic filler (C2) having a d50 of 1 µm or more and less than 20 µm is preferred.

The weight ratio of the inorganic filler (C1) to the inorganic filler (C2) [weight of the inorganic filler (C1)/weight of the inorganic filler (C2)] is preferably 10/90 to 90/10, more preferably 20/80 to 80/20, particularly preferably 30/70 to 70/30, in order to increase the filling rate of the inorganic filler and to improve the heat dissipation ability of the resulting urethane resin.

The thermal conductivity (W/m·K) of the inorganic filler (C) is preferably 0.5 to 200, more preferably 1 to 100, particularly preferably 10 to 60, in terms of heat dissipation ability of the resulting urethane resin and industrial applications.

The thermal conductivity (W/m·K) of the inorganic filler (C) can be measured, for example, by the laser flash method based on JIS R 1611.

The composition of the present invention may contain a surfactant (D), a plasticizer (E), and a urethane catalyst (F), in addition to the polyol (A), the polyisocyanate (B), and the inorganic filler (C).

The composition may also contain other common additives for urethane resin (e.g., antioxidants and UV absorbers described in JP 2018-076537 A) and common dehydrating agents such as zeolite.

Owing to the surfactant (D), the composition of the present invention can improve the dispersibility of the inorganic filler (C).

Examples of the surfactant (D) include high molecular weight surfactants (surfactants having a number average molecular weight of more than 2000) and low molecular weight surfactants (surfactants having a number average molecular weight of 2000 or less).

Examples of the high molecular weight surfactants include formalin condensates of naphthalene sulfonates (e.g., alkali metal (e.g., Na and K) salts and ammonium salt), polystyrene sulfonates (same as described above), polyacrylates (same as described above), salts (same as described above) of poly (divalent to tetravalent) carboxylic acid (co)polymers (e.g., a maleic acid/glycerol/monoallyl ether copolymer), carboxymethyl cellulose (number average molecular weight: 2000 to 10000), and polyvinyl alcohols (number average molecular weight: 2000 to 100000).

Examples of the low molecular weight surfactants include the followings.

### (1) Polyoxyalkylene surfactants

Examples thereof include adducts of 1 to 30 mol of AO (C2-C4) with aliphatic alcohols (C4-C30), with (C1-C30 alkyl)phenols, with aliphatic (C4-C30) amines, or with aliphatic (C4-C30) amides.

Examples of the aliphatic alcohols include n-, i-, sec- or t-butanol, octanol, and dodecanol.

Examples of the (alkyl)phenols include phenol, methylphenol, and nonylphenol.

Examples of the aliphatic amines include laurylamine and methylstearylamine.

Examples of the aliphatic amides include stearic acid amide.

### (2) Polyhydric alcohol surfactants

Examples thereof include monoester compounds of C4-C30 fatty acids (e.g., lauric acid and stearic acid) and polyhydric (di- to hexahydric or higher) alcohols (e.g., glycerol, pentaerythritol, sorbitol, and sorbitan).

### (3) Carboxylate surfactants

Examples thereof include alkali metal (same as described above) salts of C4-C30 fatty acids (same as described above), and alkali metal (same as described above) salts of polyoxyalkylene (carbon number of the alkylene group: 2 to 4; number of moles added: 1 to 30) alkyl ether carboxylic acids.

### (4) Sulfate surfactants

Examples thereof include sulfate alkali metal (same as described above) salts of adducts of 1 to 30 mol of AO (C2-C4) with C4-C30 aliphatic alcohols (same as described above) or aliphatic alcohols.

### (5) Sulfonate surfactants

Examples thereof include alkali metal sulfonate (same as described above) salts of (C1-C30 alkyl)phenols (same as described above).

### (6) Phosphate surfactants

Examples thereof include mono- or diphosphate salts (e.g., alkali metal (same as described above) salts and quaternary ammonium salts) of adducts of 1 to 30 mol of AO (C2-C4) with C4-C30 aliphatic alcohols (same as described above) or aliphatic alcohols.

### (7) Primary to tertiary amine salt surfactants

Examples thereof include C4-C30 aliphatic amine (e.g., primary amine (e.g., laurylamine), secondary amine (e.g., dibutylamine), or tertiary amine (e.g., dimethylstearylamine)) hydrochlorides, and inorganic acid (e.g., hydrochloric acid, sulfuric acid, nitric acid, or phosphoric acid) salts of monoesters of triethanolamine and C4-C30 fatty acids (same as described above).

### (8) Quaternary ammonium salt surfactants

Examples thereof include inorganic acid (same as described above) salts of C4-C30 quaternary ammoniums (e.g., butyltrimethylammonium, diethyllaurylmethylammonium, and dimethyldistearylammonium) .

In the present invention, the surfactant (D) does not contain a plasticizer (E) (described later).

Preferably, the number average molecular weight of the surfactant (D) is 2000 or less in terms of moldability of the resulting urethane resin.

The number average molecular weight of the surfactant (D) can be measured by the same method as the measurement method described above for the number average molecular weight.

One surfactant (D) may be used alone or two or more thereof may be used in combination.

Examples of the plasticizer (E) include phthalic acid plasticizers (e.g., diisononyl phthalate, di-(2-ethylhexyl) phthalate, diisodecyl phthalate, and butyl benzyl phthalate), fatty acid ester plasticizers (e.g., di-(2-ethylhexyl) adipate, di-n-decyl adipate, di-(2-ethylhexyl) azelate, dibutyl sebacate, and di-(2-ethylhexyl) sebacate), phosphate plasticizers (e.g., tributyl phosphate, tri-(2-ethylhexyl) phosphate, and 2-ethylhexyl diphenyl phosphate), benzoic acid plasticizers (e.g., polyethylene glycol benzoate), epoxy plasticizers (e.g., epoxidized soybean oil), trimellitate plasticizers, pyromellitate plasticizers, polyester plasticizers, and sulfonate plasticizers.

One plasticizer (E) may be used alone or two or more thereof may be used in combination.

Examples of the urethane catalyst (F) include amine catalysts (e.g., triethylenediamine, N-ethylmorpholine, diethylethanolamine, and 1,8-diazabicyclo(5,4,0)undesen-7), metal catalysts (e.g., bismuth tris(2-ethylhexanoate), stannous octylate, dibutyltin dilaurate, and lead octylate).

One urethane catalyst (F) may be used alone or two or more thereof may be used in combination.

The isocyanate index of the polyisocyanate (B) based on the polyol (A) of the composition of the present invention, i.e., a total mole number of isocyanate groups of the polyisocyanate (B) in the composition to a total mole number of hydroxy groups of the polyol (A) in the composition, is 0.20 to 0.77.

An isocyanate index of less than 0.20 results in poor moldability of the resulting urethane resin. An isocyanate index of more than 0.77 results in poor flexibility of the resulting urethane resin. The isocyanate index is preferably 0.20 to 0.60, more preferably 0.25 to 0.50, in terms of moldability and flexibility of the resulting urethane resin.

The total weight percent of the polyol (A) and the polyisocyanate (B) in the composition of the present invention is preferably 3 to 30 wt%, more preferably 3 to 20 wt%, based on the weight of the composition of the present invention.

The weight percent of the inorganic filler (C) in the composition of the present invention is 70 to 97 wt% based on the weight of the composition of the present invention.

The inorganic filler (C) in a weight percent of less than 70 wt% results in poor heat dissipation ability of the resulting urethane resin. The inorganic filler (C) in a weight percent of more than 97 wt% results in poor moldability.

The weight percent of the inorganic filler (C) is preferably 80 to 97 wt% based on the weight of the composition of the present invention, in terms of heat dissipation ability of the resulting urethane resin.

The weight percent of the surfactant (D) in the composition of the present invention is preferably 0.001 to 30 wt%, more preferably 0.01 to 10 wt%, particularly preferably 0.1 to 5 wt%, based on the weight of the inorganic filler (C).

The weight percent of the plasticizer (E) in the composition of the present invention is preferably 25 wt% or less, more preferably 1 to 25 wt%, particularly preferably 5 to 20 wt%, based on the total weight of the polyol (A) and the polyisocyanate (B).

The weight percent of the urethane catalyst (F) in the composition of the present invention is preferably 1 wt% or less, more preferably 0.001 to 1 wt%, particularly preferably 0.005 to 1 wt%, based on the total weight of the polyol (A) and the polyisocyanate (B).

The composition of the present invention can be produced, for example, by homogeneously mixing the polyol (A), the polyisocyanate (B), the inorganic filler (C), and, if necessary, other components such as the surfactant (D), the plasticizer (E), and the urethane catalyst (F) by a known mechanical mixing method (e.g., one using a mechanical stirrer, a magnetic stirrer, or the like).

In the above production method, the components may be mixed at once; or any two or more of the components may be pre-mixed, and the resulting mixture may be mixed with the remaining components (the remaining components may be in the form of a mixture).

The method of producing the composition of the present invention may include mixing an agent containing the polyol (A) (also referred to as a "main agent") and an agent containing the polyisocyanate (B) (also referred to as a "curing agent").

Each of the inorganic filler (C), the surfactant (D), the plasticizer (E), and the urethane catalyst (F) may be contained in either the main agent or the curing agent.

The main agent and the curing agent may contain the above-described additives and dehydrating agents, if necessary.

After homogeneous mixing of the components of the main agent and homogeneous mixing of the components of the curing agent, the resulting main agent and the resulting curing agent are mixed together by a known mixing method (e.g., one using a mechanical stirrer, a magnetic stirrer, or the like, or one using a static mixer) until a homogeneous mixture is obtained. After homogeneous mixing, the resulting mixture is applied to a substrate and cured.

The reaction temperature is preferably 10°C to 30°C in terms of reactivity and pot life, and the gas phase is preferably purged with nitrogen in terms of safety. The curing temperature is preferably 10°C to 160°C, more preferably 25°C to 120°C, in terms of reactivity and thermal deterioration prevention.

The urethane resin of the present invention is a reaction product of the composition of the present invention.

Preferably, the composition is reacted at a temperature of 50°C to 130°C. Preferably, the reaction time is 0.1 to 24 hours.

Preferably, the urethane resin of the present invention is molded into a sheet in terms of handling during attachment.

When the urethane resin has an adhesive surface, the urethane resin may have a protective film adhered to its surface by adhesion thereon.

The protective film may be a resin film, for example. The protective film covers the adhesive surface of the urethane resin until just before actual use of the urethane resin (until just before production of the cooler and the product of the present invention, which are described in detail later), whereby the protective film can prevent contamination and breakage, for example.

In addition, since the protective film prevents adhesion of the urethane resin, sheets of the urethane resin can be stacked during shipment. Such a protective film is released and removed just before actual use, whereby the urethane resin can be applied to actual use with good adhesion.

The urethane resin that is a reaction product of the composition of the present invention has excellent heat dissipation ability and is thus suitably used for a heat dissipation sheet of a component that generates heat (e.g., an electronic component). The urethane resin also has excellent flexibility in addition to high heat dissipation ability, and is thus most suitably used as a heat dissipation sheet of a component including a heat generating portion having a complicated shape.

The cooler of the present invention includes the urethane resin of the present invention and a heat receiving component.

Examples of the heat receiving component include substrates made of gold, silver, copper, aluminum, nickel, iron, tin, alloy of these metals, or the like, and graphite sheets.

Preferably, in the cooler of the present invention, the urethane resin of the present invention and the heat receiving component are adhered to each other in terms of heat dissipation ability.

The cooler of the present invention can be produced, for example, by allowing the urethane resin and the heat receiving component to adhere to each other.

An adhesive or the like may be used for adhesion. When the urethane resin has an adhesive surface, the heat receiving component may be adhered to a contact surface by adhesion of the urethane resin, without using an adhesive or the like.

The product of the present invention includes the urethane resin of the present invention and a heat generating component.

The heat generating component is a component to be cooled. Examples thereof include semiconductor devices (e.g., CPU), LED backlights, batteries, and electric circuits equipped with these components.

The urethane resin in the product of the present invention may be provided as a cooler including the urethane resin.

Preferably, in the product of the present invention, the urethane resin of the present invention and the heat generating component are adhered to each other in terms of heat dissipation ability.

When the urethane resin in the product of the present invention is provided as the cooler as described above, preferably, the heat generating component and the heat receiving component are adhered to each other via the urethane resin in terms of heat dissipation ability.

A specific embodiment may be one in which the heat receiving component is adhered to one side or both sides of the heat generating component of an electric circuit or the like via the urethane resin.

The product of the present invention can be produced, for example, by allowing the urethane resin and the heat generating component to adhere to each other, as in the case of the cooler.

When the urethane resin in the product of the present invention is provided as the cooler as described above, the product of the present invention can be produced, for example, by allowing the heat generating component and the heat receiving component to adhere to each other via the urethane resin.

### EXAMPLES

Hereinafter, the present invention is specifically described with reference to examples but the present invention is not limited to these examples.

Hereinafter, the "part(s)" means "part(s) by weight".

### (Examples 1 to 7 and Comparative Examples 1 to 3: Production of composition)

The components shown in Table 1 were mixed according to the amounts shown in Table 2, whereby compositions (Examples 1 to 6) and comparative compositions (Comparative Examples 1 to 3) were obtained.

The number average molecular weights (Mn) of the polyol (A) and the surfactant (D) are values measured by GPC under the following conditions.
Device: HLC-8120 (Tosoh Corporation)
Column: TSKgel α-6000, G3000 PWXL (Tosoh Corporation) Detector: refractive index (RI)
Eluent: 0.5% sodium acetate in water/methanol (volume ratio: 70/30)
Eluent flow rate: 1.0 ml/min
Column temperature: 40°C
Sample concentration: 0.25 wt%
Amount to be injected: 200 µl
Standard substance: TSK Standard Polyethylene Oxide (Tosoh Corporation)
Data processing software: GPC-8020 model II (Tosoh Corporation)

### (Examples 8 to 14 and Comparative Examples 4 to 6: Production of urethane resin sheet)

The compositions obtained in Examples 1 to 7 and the comparative compositions obtained in Comparative Examples 1 to 3 were used to produce urethane resin sheets (Examples 8 to 14) and comparative urethane resin sheets (Comparative Examples 4 to 6), respectively, by the following method.

### <Method of producing urethane resin sheet>

Each composition was injected to fill a mold (6 cm (length) × 12 cm (width) × 1 cm (depth)), pressed by a pressing machine, and left to stand at 120°C for one hour for reaction, whereby an intended urethane resin sheet was produced.

The moldability, thermal conductivity, and Asker C hardness of the urethane resin sheets obtained in Examples 8 to 14 and the comparative urethane resin sheets obtained in Comparative Examples 4 to 6 were evaluated by the following methods. Table 2 shows the results.

**[Table 1]**

| | | Component | Product name | Manufacturer | | Physical property value | |
|---|---|---|---|---|---|---|---|
| Polyol (A) | a-1 | Adduct of propylene oxide with glycerol | SANNIX GP-1500 | Sanyo Chemical Industries, Ltd. | Mn: 1500 | Number of hydroxy groups in one molecule: 3 | Hydroxyl value: 112 mgKOH/g |
| | a-2 | Adduct of propylene oxide with glycerol | SANNIX GP-3000 | Sanyo Chemical Industries, Ltd. | Mn: 3000 | Number of hydroxy groups in one molecule: 3 | Hydroxyl value: 56 mgKOH/g |
| | a-3 | Block adduct of propylene oxide and ethylene oxide with glycerol | SANNIX KC-737 | Sanyo Chemical Industries, Ltd. | Mn: 7000 | Number of hydroxy groups in one molecule: 3 | Hydroxyl value: 24 mgKOH/g |
| | a-4 | Random adduct of propylene oxide and ethylene oxide with pentaerythritol | SANNIX KC-282 | Sanyo Chemical Industries, Ltd. | Mn: 8000 | Number of hydroxy groups in one molecule: 4 | Hydroxyl value: 28 mgKOH/g |
| Polyol (A') | a'-1 | Polytetramethylene ether glycol | PTMG-2000 | Mitsubishi Chemical Corporation | Mn: 2000 | Number of hydroxy groups in one molecule: 2 | Hydroxyl value: 53 to 59mgKOH |
| Polyisocyanate (B) | b-1 | Isophorone diisocyanate | Desmodur I | Sumika Covestro Urethane Co., Ltd. | NCO content: 37.8 wt% | - | - |
| | b-2 | frimer of hexamethylene diisocyanate (isocvanurate) | TLA-100 | Asahi Kasei Corp. | NCO content: 23.2 wt% | - | - |
| Inorganic filler (C) | c-1 | Spherical alumina | AZ75-150 | Nippon Steel & Sumikin Materials Co., Ltd. Micron Co. | d50: 75 µm | Thermal conductivity: 30W/m·K | - |
| | c-2 | Spherical alumina | AZ35-125 | Nippon Steel & Sumikin Materials Co., Ltd. Micron Co. | d50: 37 µm | Thermal conductivity: 30W/m K | - |
| | c-3 | Spherical alumina | AZ10-75 | Nippon Steel & Sumikin Materials Co., Ltd. Micron Co. | d50: 11 µm | Thermal conductivity: 30W/m K | - |
| Surfactant (D) | d-1 | Polyoxyalkylene alkyl ether | NAROACTY CL-50 | Sanyo Chemical Industries, Ltd. | Mn: 403 | - | - |
| | d-2 | Monofatty acid sorbitan ester | IONET S-80 | Sanyo Chemical Industries, Ltd. | Mw: 429 | - | - |
| | d-3 | Sodium polyoxyethylene lauryl ether acetate | Viewlight LCA-25NH | Sanyo Chemical Industries, Ltd. | Mw: 336 | - | - |
| Plasticizer (E) | e-1 | Diisononyl phthalate | DINP | Aekyung Petrochemical Co.. Ltd. | - | - | - |
| | e-2 | Polyethylene glycol benzoate | EB-300 | Sanyo Chemical Industries, Ltd. | - | - | - |
| Urethane catalyst (F) | f-1 | Bismuth tris(2-ethylhexanoate) | NEOSTANN U-600 | Nitto Kasei Co., Ltd. | - | - | - |

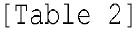

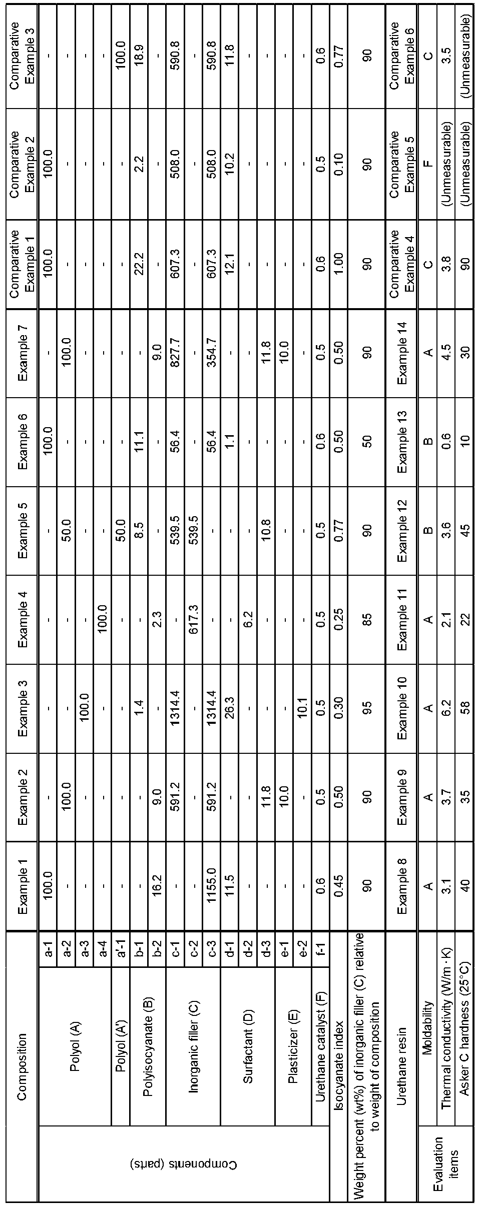

### (Examples 15 to 21 and Comparative Examples 7 to 9: Production of composition)

The components shown in Table 3 were individually added in an amount (parts) shown in Table 4 to the main agent containing the polyol (A) and/or the polyol (A'), and/or to the curing agent containing one or more polyisocyanates (B). After homogeneous mixing of the components of the main agent and homogeneous mixing of the components of the curing agent, the resulting main agent and the resulting curing agent were mixed together until a homogeneous mixture was obtained, whereby compositions (Examples 15 to 21) and comparative compositions (Comparative Examples 7 to 9) were obtained.

### (Examples 22 to 28 and Comparative Examples 10 to 12: Production of urethane resin sheet)

The compositions obtained in Examples 15 to 21 and the comparative compositions obtained in Comparative Examples 7 to 9 were used to produce urethane resin sheets (Examples 22 to 28) and comparative urethane resin sheets (Comparative Examples 10 to 12) by the following method.

Each composition was injected to fill a mold (6 cm (length) × 12 cm (width) × 1 cm (depth)), pressed by a pressing machine, and left to stand at 120°C for one hour for reaction, whereby an intended urethane resin sheet was produced.

The moldability, thermal conductivity, and Asker C hardness of the urethane resin sheets obtained in Examples 22 to 28 and the comparative urethane resin sheets obtained in Comparative Examples 10 to 12 were evaluated by the following methods. Table 4 shows the results.

**[Table 3]**

| | | Component | Product name | Manufacturer | Physical propertv value | | |
|---|---|---|---|---|---|---|---|
| Polyol (A) | a-1 | Adduct of propylene oxide with glycerol | SANNIX GP-1500 | Sanyo Chemical Industries, Ltd. | Mn: 1500 | Number of hydroxy groups in one molecule: 3 | Hydroxyl value: 112 mgKOH/g |
| | a-2 | Adduct of propylene oxide with glycerol | SANNCK GP-3000 | Sanyo Chemical Industries, Ltd. | Mn: 3000 | Number of hydroxy groups in one molecule: 3 | Hydroxyl value: 56 mgKOH/g |
| | a-3 | Block adduct of propylene oxide and ethylene oxide with glycerol | SANNIX KC-737 | Sanyo Chemical Industries, Ltd. | Mn: 7000 | Number of hydroxy groups in one molecule: 3 | Hydroxyl value: 24 mgKOH/g |
| | a-4 | Random adduct of propylene oxide and ethylene oxide with pentaerythritol | SANNIX KC-282 | Sanyo Chemical Industries, Ltd. | Mn: 8000 | Number of hydroxy groups in one molecule: 4 | Hydroxyl value: 28 mgKOH/g |
| Polyol (A') | a'-1 | Polytetramethylene ether glycol | PTMG-2000 | Mtsubishi Chemical Corporation | Mn: 2000 | Number of hydroxy groups in one molecule: 2 | Hydroxyl value: 53 to 59 mgKOH |
| Polyisocyanate (B) | b-1 | Isophorone diisocyanate | Desmodur I | Sumika Covestro Urethane Co., Ltd. | NCO content: 37.8 wt% | - | - |
| | b-2 | frimer of hexamethylene diisocyanate (is ocyanurate) | TLA-100 | Asahi Kasei Corp. | NCO content: 23.2 wt% | - | - |
| | b-3 | Urethane prepolymer terminated with NCO formed from polyoxytetramethylene glycol and 4,4'-diphenylmethane diisocyanate | SANPRENE P-6090 | Sanyo Chemical Industries, Ltd. | NCO content: 77wt% | - | - |
| horganic filler (C) | c-1 | Spherical alumina | AZ75-150 | Nippon Steel & Sumikin Materials Co., Ltd. Mcron Co. | d50: 75 µm | Thermal conductivity: 30 W/m·K | - |
| | c-2 | Spherical alumina | AZ35-125 | Nippon Steel & Sumikin Materials Co., Ltd. Mcron Co. | d50: 37µm | Thermal conductivity: 30 W/m·K | - |
| | c-3 | Spherical alumina | AZ10-75 | Nippon Steel & Sumikin Materials Co., Ltd. Mcron Co. | d50:11 µm | Thermal conductivity: 30 W/m·K | - |
| Surfactant (D) | d-1 | Polyoxyalkylene alkyl ether | NAROACTY CL-50 | Sanyo Chemical Industries, Ltd. | Mw: 403 | - | - |
| | d-2 | Monofatty acid sorbitan ester | IONET S-80 | Sanyo Chemical Industries. Ltd. | Mw 429 | - | - |
| | d-3 | Sodium polyoxyethylene lauryl ether acetate | Viewlight LCA-25NH | Sanyo Chemical Industries. Ltd. | Mw: 336 | - | - |
| Plasticizer (E) | e-1 | Diisononyl phthalate | DINP | Aekyung Petochemical Co., Ltd | - | - | - |
| | e-2 | Polyethylene glycol benzoate | EB-300 | Sanyo Chemical Industries. Ltd. | - | - | - |
| Urethane catalyst (F) | f-1 | Bismuth tris(2-ethylhexanoate) | NEOSTANNU-600 | Nitto Kasei Co., Ltd. | - | - | - |

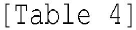

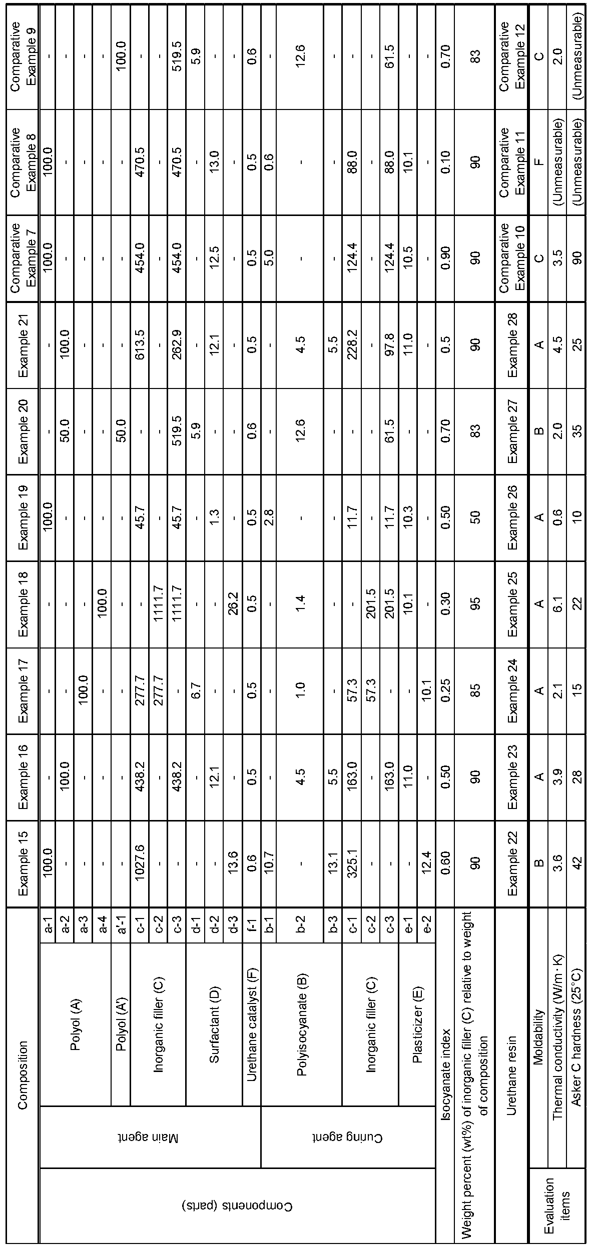

### <Moldability>

Each urethane resin sheet (6 cm (length) × 12 cm (width) × 1 cm (depth)) was cut with a cutter knife at 2 cm intervals from the end in the width direction so as to obtain cross sections parallel to the length direction and perpendicular to the bottom. Then, the cross sections were visually observed for the presence or absence of voids, and the moldability was evaluated based on the following criteria.

The urethane resin sheet tends to have lower heat dissipation ability at a portion having voids, and the urethane resin sheet may be accidentally removed at a portion around the void portion. Thus, fewer voids are better as described in the following criteria.

### (Criteria for moldability)

A: No voids were generated.
B: One or two voids were generated.
C: Three or four voids were generated.
F: Four or more voids were generated.

### <Thermal conductivity>

Each urethane resin sheet was left to stand at 25°C for two hours, and the thermal conductivity (unit: W/m·K) was measured by the probe method using a thermal conductivity meter (model number: "QTM-D3", available from Kyoto Electronics Manufacturing Co., Ltd.).

A higher thermal conductivity indicates better heat dissipation ability.

The comparative urethane resin sheets obtained in Comparative Examples 5 and 11 were unmeasurable because these sheets had many voids and were unable to be tested (urethane resin sheets were disintegrated).

### <Asker C hardness>

The hardness (Asker C hardness) at 25°C of each urethane resin sheet that was left to stand at 25°C for two hours was measured in accordance with JIS K 7312 "7. Hardness test". The type of the test was Type C. A value immediately after attachment of the tester to each sheet was read.

A lower Asker C hardness indicates higher followability of the urethane resin sheet to the shape of the cooler and better adhesion of the urethane resin sheet to the cooler.

The comparative urethane resin sheets obtained in Comparative Examples 5 and 11 were unmeasurable because these sheets had many voids and were unable to be tested (urethane resin sheets were disintegrated). The comparative urethane resin sheets obtained in Comparative Examples 6 and 12 were unmeasurable because these sheets were too soft to be tested (urethane resin sheets were disintegrated).

### INDUSTRIAL APPLICABILITY

The urethane resin that is a reaction product of the composition of the present invention has excellent heat dissipation ability and excellent flexibility is thus suitably used for heat dissipation sheets of components that generate heat (e.g., electronic components).

## Claims

1. A composition comprising:
a polyol (A);
a polyisocyanate (B); and
an inorganic filler (C),
wherein the polyol (A) contains a polyol (A1) having at least three hydroxy groups in one molecule,
an isocyanate index of the polyisocyanate (B) based on the polyol (A) is 0.20 to 0.77, the isocyanate index being a ratio of a total mole number of isocyanate groups of the polyisocyanate (B) in the composition to a total mole number of hydroxy groups of the polyol (A) in the composition, and
a weight percent of the inorganic filler (C) is 70 to 97 wt% based on the weight of the composition.

2. The composition according to claim 1,
wherein the polyol (A) has a number average molecular weight of 1000 to 10000.

3. The composition according to claim 1 or 2,
wherein the polyisocyanate (B) is at least one selected from the group consisting of an acyclic aliphatic polyisocyanate, an alicyclic polyisocyanate, an isocyanurate of an acyclic aliphatic polyisocyanate, and an isocyanurate of an alicyclic polyisocyanate.

4. The composition according to any one of claims 1 to 3, further comprising a surfactant (D) having a number average molecular weight of 2000 or less.

5. A method of producing the composition according to any one of claims 1 to 4, comprising:
mixing an agent containing the polyol (A) and an agent containing the polyisocyanate (B).

6. A urethane resin,
which is a reaction product of the composition according to any one of claims 1 to 5.

7. A cooler comprising:
the urethane resin according to claim 6; and
a heat receiving component.

8. A product comprising:
the urethane resin according to claim 6; and
a heat generating component.
